# EUROPEAN PATENT SPECIFICATION

(11) **EP 2 085 843 B1**
(45) Date of publication and mention of the grant of the patent: **14.11.2012**
(21) Application number: 09150837.4
(22) Date of filing: 19.01.2009
(51) Int. Cl.: G05B 19/048

(54) **Method and system for analyzing performance of a wind farm**
Verfahren und System zur Analyse der Leistung eines Windparks
Procédé et système d'analyse de la performance d'un parc éolien

(30) Priority: 24.01.2008 US 19525
(43) Date of publication of application: 05.08.2009
(73) Proprietor: General Electric Company, Schenectady, NY 12345 (US)
(72) Inventor: Rajiv, Vrinda, Schenectady, NY 12303 (US); Kornfein, Mark M., Latham, NY 12110 (US); Lablanc, Michael R., Wilton, NY 12831 (US); Giguere, Philippe, Simpsonville, SC 29681 (US); Black, Stephen H., Duanesburg, NY 12056 (US)
(74) Representative: Bedford, Grant Richard

(56) References cited:
- WO-A1-03/029648
- DE-A1- 19 713 583

## Description

The field of this invention relates generally to industrial analysis tools, and more particularly to methods and apparatus for automating the analysis of wind turbine farm power generation performance using such analysis.

The analysis of site-specific loads on turbines usually involves multiple steps performed by multiple people at global locations. Individual, global users installed analysis tools, data sets and configuration files on local computers and created analysis results by manually executing the multiple required analyses. Even within a step, it involves manual touch points for providing initial and intermediate inputs. Besides, there is no system to ensure organization of the steps based on dependencies.

In at least one previously known process, different, geographically dispersed engineers used separate programs on-their own computers, and different engineers did not necessarily use the same programs. Engineers communicated inputs and outputs of these programs electronically by email or file transfer to each other, as needed. Each engineer may also have separately processed their own data using a computer and then sent the results elsewhere, where the results were sometimes processed by a different computer running different programs.

DE 197 13 583 discusses an evaluation method for detecting dynamic loading of a wind powered generation plant for comparison with component failure characteristics in order to determine operational lifetime thereof.

In one aspect of the present invention, there is provided a system comprising a server operatively coupled to a computer network in accordance with appended claim 1.

In yet another aspect a method in accordance with appended claim 7 is provided.

Various aspects and embodiments of the present invention will now be described in connection with the accompanying drawings, in which:
Figure 1 is a pictorial block diagram of one embodiment of the present invention.
Figure 2 is a flow chart showing an exemplary method embodiment of the present invention.
Figure 3 is a pictorial diagram of a wind farm product.
Figure 4 is an exemplary method embodiment of the present invention that ensures that a contractual term relating to a quality of a product is met.
Figure 5 is a flow chart of an exemplary method embodiment of the present invention for optimizing or at least improving the longevity of a wind farm.
Figure 6 is a block diagram showing additional details of a global portal used in some embodiments of the present invention.

The foregoing summary, as well as the following detailed description of certain embodiments of the present invention, will be better understood when read in conjunction with the appended drawings. To the extent that the figures illustrate diagrams of the functional blocks of various embodiments, the functional blocks are not necessarily indicative of the division between hardware circuitry. Thus, for example, one or more of the functional blocks (e.g., processors or memories) may be implemented in a single piece of hardware (e.g., a general purpose signal processor or a block or random access memory, hard disk, or the like). Similarly, the programs may be stand alone programs, may be incorporated as subroutines in an operating system, may be functions in an installed software package, and the like. It should be understood that the various embodiments are not limited to the arrangements and instrumentality shown in the drawings.

As used herein, an element or step recited in the singular and preceded with the word "a" or "an" should be understood as not excluding plural said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

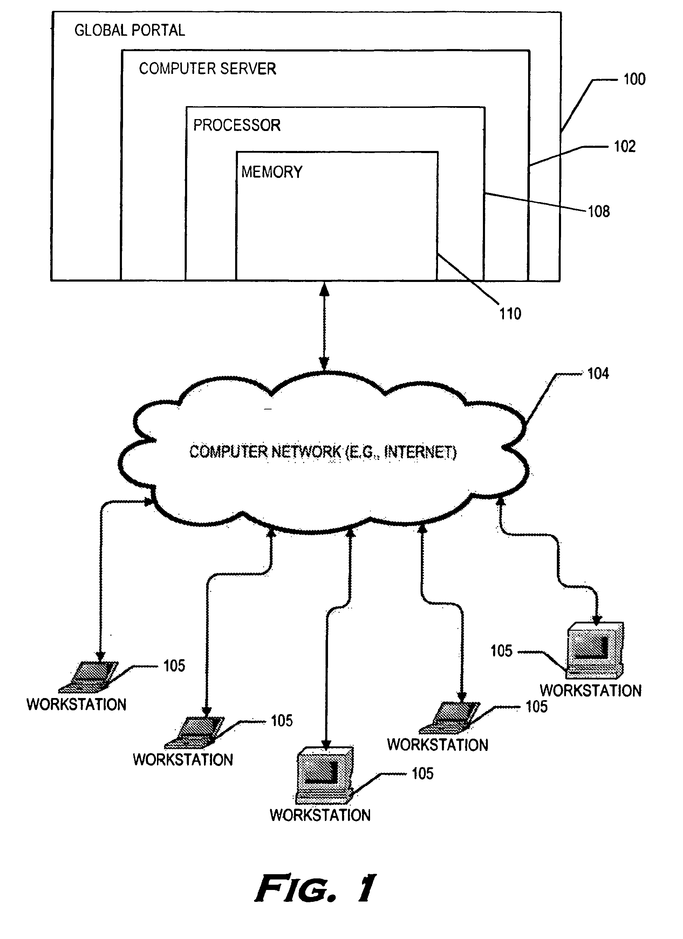

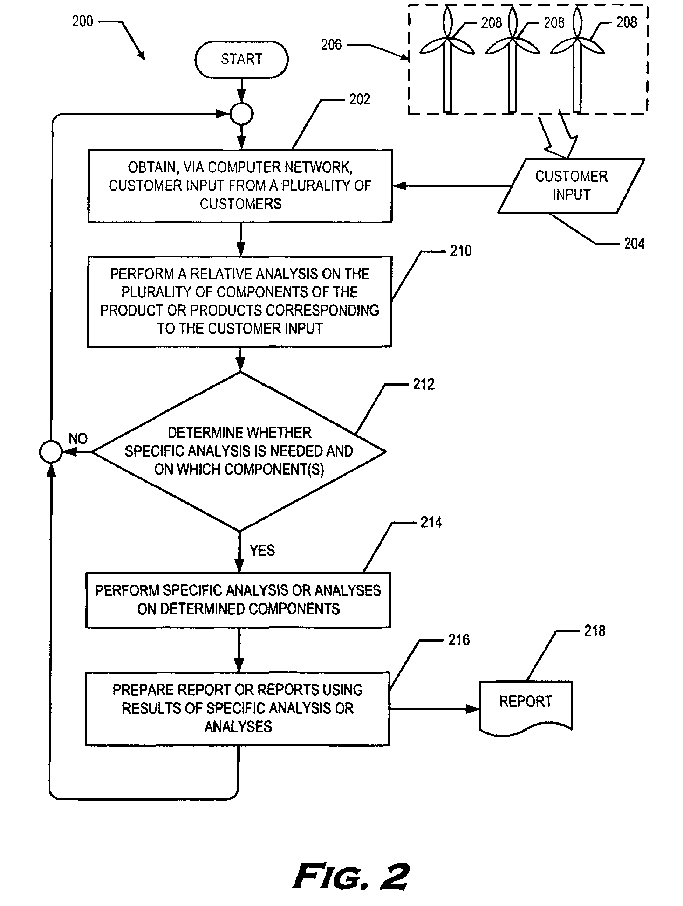

In some embodiments of the present invention and referring to Figure 1, a system, or global portal 100 is provided. Global portal 100 includes a computer server 102 operatively coupled to a computer network 104, such as the Internet. The term "global" is used because some of the embodiments are intended to replace individual computers in a (possibly geographically diverse) organization, wherein each computer is configured with separate copies of programs or programs that analyze customer data. Instead, a plurality of workstations 105 access global portal 100 via network 104. Advantageously, some embodiments of "global portal" 100 standardize the analysis, so that differences in programs, options, and/or data entry can be avoided and more consistent results can be obtained. The server includes a processor having a memory that includes software modules having instructions configured to instruct the processor to perform a method as exemplified by a series of operations illustrated in flow chart 200 of Figure 2.

Referring to Figure 2, these operations include, but are not necessarily limited to obtaining, at 202, via computer network 104, customer input 204 from a plurality of customers. Customer input 204 includes data relating to the performance of at least one product 206 operated by each customer, wherein each product 206 comprises a plurality of components 208. For each of customer inputs 204, the method includes, at 210, performing a relative analysis on the plurality of components 208 of the product or products 206 corresponding to customer input 204. Using global portal 100, the results of the relative analysis are used to determine, at 212, whether, and on which components 208, a specific analysis or analyses are to be performed. If no determinations are to be performed at 212, then, in one embodiment, the method includes waiting for more customer inputs 204 to be obtained at 202. Otherwise, a specific analysis or specific analyses is/are performed at 214 on the determined components and the results are used, at 216, to prepare a report or reports 218. The report or reports 218 includes, in one embodiment, service recommendations for the corresponding product or products 206 directed to each customer providing a customer input 204.

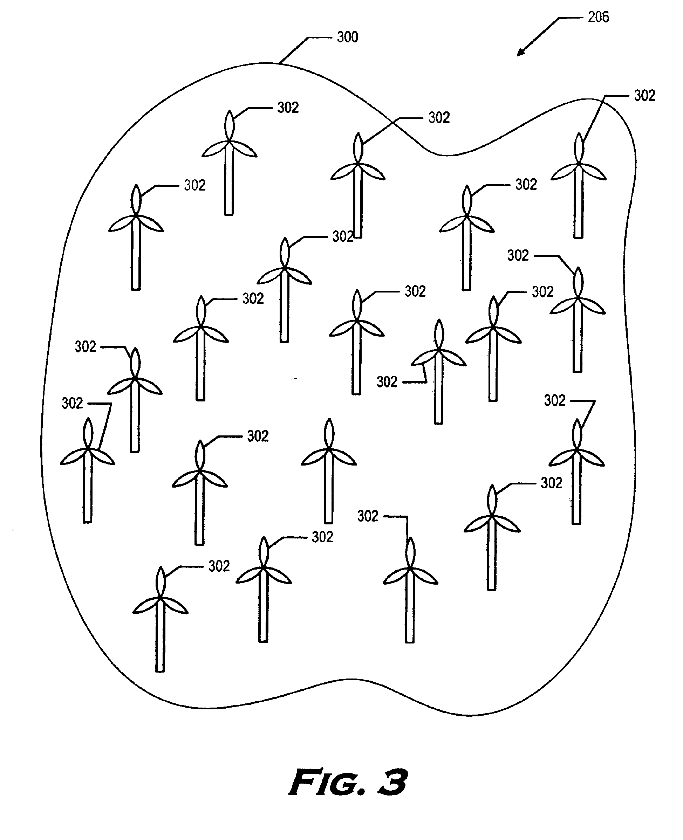

In some embodiments of the present invention and referring to Figure 3, product 206 is a wind farm 300, the plurality of components 208 comprise wind turbines 302, and the relative analyses, specific analyses, and reports relate to wind loads. Some embodiments are configured to maximize or at least improve a maintenance or longevity metric such as time to maintenance, cost of maintenance, or wind turbine lifetime. Thus, some embodiments are configured so that the relative analysis at 210 determines a subset (e.g., 304) of wind turbines 302 having maximum loads, and the specific analysis at 214 includes a load analysis on subset 304 of wind turbines 302. Dependent upon the load analysis, the report or reports 218 may include a curtailment strategy and/or other recommendations. These other recommendations may include moving one or more of wind turbines 302 to a different location on wind farm 300, replacing one or more wind turbines 302 with a different model of wind turbine 302 capable of withstanding higher or at least different wind loads, or combinations thereof.

In some embodiments of the present invention, customer input 204 includes at least one of meteorological data, geographic data, characteristics of the wind turbine, which model the customer wants to use, the location of the wind turbine, and the relative analyses and the specific analyses use of that data. In addition, or alternatively thereto, global portal 100 is configured to use exchangeable software modules.

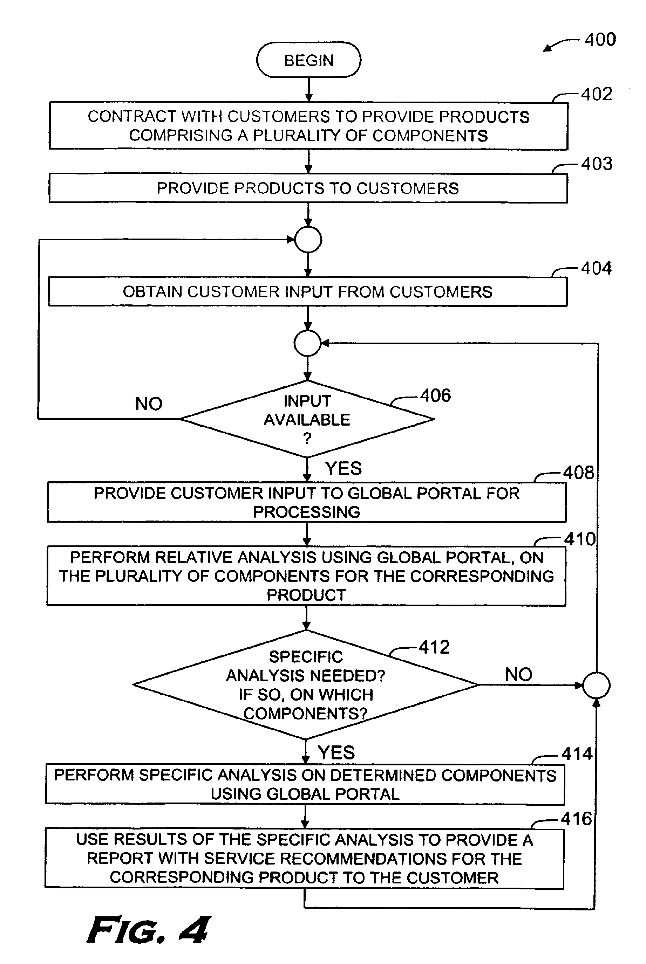

Referring to flow chart 400 of Figure 4, a method is provided that tracks performance of a product using global portal 100 (shown in Figure 1). The method includes, at 402, contracting with customers to provide products 206 (shown in Figures 2 and 3), which include a plurality of components 208 (shown in Figure 2). The method, in one embodiment, also includes, at 403, providing products 206 to the customers. For existing products, method steps 402 and 403 can be shipped. The method further includes at 404, obtaining customer input 204 (shown in Figure 2) from customers. Customer input 204 relates to the performance of at least some of provided products 206 and their corresponding pluralities of components 208. Then, at 406, for each customer who provides customer input 204, or at least for some of these customers, the next step is providing, at 408, the customer input 204 to global portal 100. At 410, the global portal performs a relative analysis on components 208 of corresponding product 206 for each customer input. At 412, the results of the relative analysis are used to determine, using global portal 100, whether a specific analysis is to be performed and on which of components 208. If no specific analysis is to be performed at 412, a favorable report may be generated in some embodiments, but in any case, the process repeats until there is no additional customer input. Otherwise, if a specific analysis is to be performed, the method further includes, at 414, performing a specific analysis on components 208 using global portal 100, and at 416, using results of the specific analysis to provide a report 218 with service and/or operational recommendations for corresponding product 206 to the customer.

In some embodiments of the method and referring to Figures 2 and 3, product 206 is a wind farm 300 and components 208 comprise wind turbines 302. The quality of the system in such embodiments can be a maintenance or longevity metric. The relative analysis determines a subset of wind turbines 302 having maximum loads, and the specific analysis includes a load analysis on the subset of wind turbines 302. The service and/or operational recommendations can comprise a curtailment strategy, or a recommendation to move one or more of wind turbines 302, replace one or more wind turbines 302 with another model of wind turbine (for example, one that can withstand higher loads), or a combination thereof.

In some embodiments of the present invention, customer input 204 includes meteorological data, geographic data, characteristics of wind turbine, which model customer wants to use, and location of wind turbine. Also, in some embodiments of the present invention, results of the specific analysis are used to provide service and/or operational recommendations for the corresponding product 206 to the customer. Further, a software module of global portal 100 is used to determine at least one of a curtailment strategy, which of one or more of wind turbines 302 should be moved, and which of one or more wind turbines 302 should be replaced with a wind turbine of a different model.

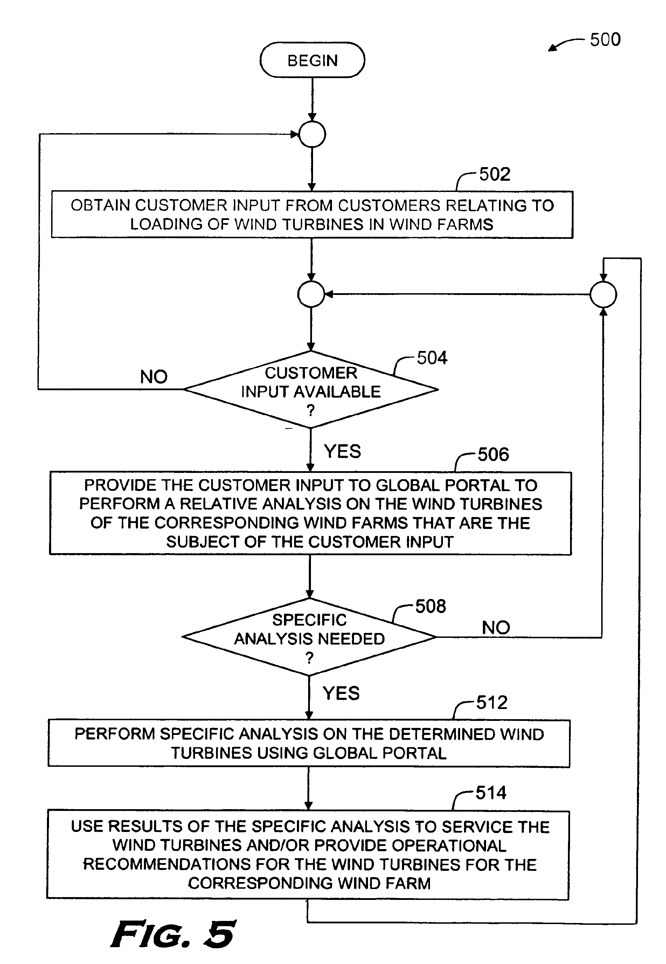

In yet another embodiment of the present invention and referring to Figures 1 through 3 as well as flow chart 500 of Figure 5, a method for optimizing or at least improving the longevity of a wind farm 300 using global portal 100 is provided. Global portal 100 comprises computer server 102 operatively coupled to computer network 104. Computer server 102 includes processor 108 having memory 110, and software modules inside of memory 110 that include instructions configured to instruct processor 108 to implement the method. The method includes, at 502, obtaining customer input 204 from customers. The customer input 204 relates to the loading of wind turbines 302 in wind farms 300. At 504, a loop is started for each customer who provides customer input 204, or for at least some of these customers. The loop includes, at 506, providing the customer input 204 to global portal 100 to perform a relative analysis on the wind turbines 302 of corresponding wind farms 300 that are the subject of the customer input 204. The loop continues at 508, where the results of the relative analysis are used by global portal 100 to determine whether a specific analysis is to be performed and on which of wind turbines 302. If not, the loop proceeds to the next customer input 204 at 504, or if there is no next customer input at 504, the method continues, in one embodiment, by waiting for additional customer inputs at 502. If it is determined that a specific analysis is to be performed at 508, then the loop continues at 512, where a specific analysis on the determined wind turbines 302 is performed using global portal 100. The loop continues at 514, where results of the specific analysis are used to service wind turbines 302 of corresponding wind farm 300.

In some embodiments of the present invention, the relative analysis at 506 determines a subset of the wind turbines having maximum loads, and said specific analysis comprises a load analysis on subset 304 of wind turbines 302. Also, in some embodiments, customer input 204 includes meteorological data.

Further, in some embodiments of the present invention, the service performed at 514 includes curtailment, moving one or more said wind turbines, changing a model of one or more wind turbines, or a combination thereof. In some embodiments, software modules or are exchangeable so that a different software module can be loaded into memory to replace another having a similar function, without having to replace all of the software modules. In such embodiments, the method further includes exchanging one or more of the software modules.

It will thus be appreciated that embodiments of the present invention utilize two kinds of analyses to obtain a final result for a quality metric, such as a load analysis of wind turbines. For example, in some embodiments, two kinds of analyses are performed, one being a relative analysis and one being a specific analysis. For example, a relative analysis is performed on a wind farm that includes fifty-five turbines. The analysis determines the relative loads on each of the turbines. From the relative analysis, which is relatively fast, the wind turbine(s) with the highest load or loads is/are determined. In the present example, it is determined that wind turbine number forty-two suffers from the highest loads. This wind turbine is singled out for a specific analysis, which is computationally intensive and thus relatively slow, but which suffices for the quality metric of the entire product, i.e., the wind turbine farm. The reason the specific analysis of the specific wind turbine suffices is that wind turbine number forty-two in this example sets a limit to the load that can be experienced by the entire wind farm. A set of programs can be used to perform the analyses, but the architecture of various embodiments of the present invention permit one or more of these programs to be swapped out and replaced with another program, transparently to the user. In another embodiment, different types of wind farm analysis are used such as a lay out plan analysis, and/or wind resource assessment.

In embodiments of the present invention, data is processed everywhere the same way, at a centralized server, avoiding problems such as obtaining different results using the same input data.

In addition, some embodiments of the present invention allow software modules to be swapped out to use alternative programs, or to provide alternative features. For example, software modules can be proprietary programs, but the present invention allows the use of these or other programs, replacing them as modules in a manner transparent to users and the customer, while still obtaining reliable results. This modularity provides measured flexibility with regard to changing features of the system.

In some embodiments of the present invention, an applications engineer receives customer input, for example, measurements made by a customer of a wind farm that the customer operates. The customer input, in one embodiment, includes performance data, dependent variables, and independent variables. The applications engineer validates the input data, to determine whether the data is within range and in the proper form. In various embodiments of the present invention, the global server performs that validation, or it is done by the global server in combination with an applications engineer's preliminary validation.

A relative analysis program is used in some embodiments of the present invention to determine the most heavily loaded wind turbine in a wind farm. The relative analysis program orders the wind turbines by loading so that the limiting wind turbines in the wind farm can be further analyzed to determine whether it (or they) are too heavily loaded. If the most heavily loaded wind turbine (or turbines) passes all the requirements in the specific analysis that follows, then a determination is made that all of the other wind turbines also do. In one embodiment of the present invention, the relative analysis program module takes about fifteen minutes to run, whereas the detailed specific analysis program module that is subsequently run takes about an entire day to run. Thus, many days of analysis work is saved by running the specific analysis program module only on the most heavily loaded wind turbine or turbines, as determined by the relative analysis program module.

The relative analysis program module creates a number of files and sets up information for the specific analysis program module. The engineer can be notified of the completion of the relative analysis program module to give him the opportunity to look at the results of that module and to decide what to do next. However, in some embodiments of the present invention, the specific analysis program module is started immediately, using the results of the relative analysis program module.

Upon completion of the specific analysis program module, the engineer is notified. For example, in one embodiment, an email is sent to the engineer. The engineer is able to retrieve the results of the run, or the results are automatically transferred to the engineer via a suitable transfer protocol, e.g., ftp, http, sftp, or email. The global portal, in one embodiment, includes a database that contains information on allowable limits (e.g., loads) on the wind turbines, so that the global portal can use a software module to suggest performance improvements and/or longevity of the wind farm. The suggestions may include, for example, that a customer has too many turbines for a specific site, or that a smaller turbine be used in a specific position. In one embodiment, a curtailment strategy is included in the suggestions. The curtailment strategy, for example, may be to turn off one or more wind turbines under certain wind conditions because of excess fatigue under such conditions.

The global portal generates results and reports that can be communicated by an applications engineer to a customer. Reports may also be communicated internally to different employees and/or agents of the supplier, such as the commercial manager, in case a different siting strategy may be beneficial.

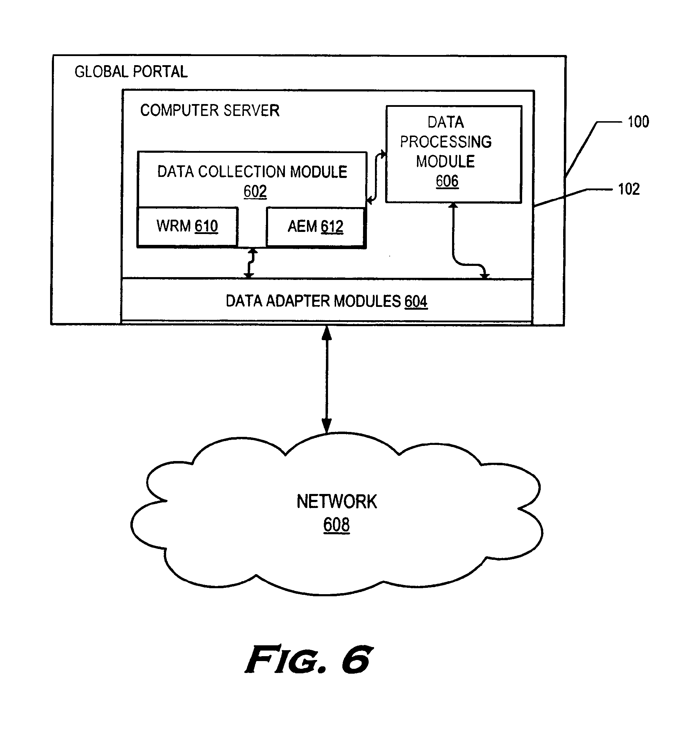

In some embodiments of the present invention and referring to Figure 6, global portal 100 comprises a data collection module 602, data adapter modules 604, and a data processing module 606. Data collection module 602 collects data received over network 608 for processing within global portal 100. Data adapter modules 604 comprise a compatibility layer that checks the data received by data collection module 602 for consistency and converts this data, as necessary, into standardized forms for use by data processing module 606 and data collection module 602, depending upon which direction the data is being shipped.

In one embodiment, data collection module 602 comprises a wind resource module or submodule 610 (WRM) and an analysis execution module or submodule 612 (AEM). The analysis execution module or submodule 612 is available to all other modules to do specific computational jobs. Wind resource module or submodule 610 may include, for example, default specifications for various wind turbine models. The default specifications may be used to lessen the burden on customers inputting customer data (by e.g., reducing the number of data fields that must be filled out), or for comparison purposes (e.g., to flag or correct inconsistent or unreasonable data received by global portal 100).

Data input and graphical user interface software can comprise, for example, a JAVA^{®} or JAVASCRIPT^{®} program over the Internet. A data range check in one embodiment, is included as part of the application. An enterprise data storage system can be a commercial database management system. The outputs are a high-level layout analysis. Thus, data of the results and the analysis test may be saved to the data collection module, and may be transformed to achieve better compatibility with other programs. In addition, the system is able to run legacy programs of the analyses at times in the future.

As described above, a unique package of site specific loads analysis includes multiple tools systematically organized to provide an automated and timely analysis of site-specific loads. In addition, the above described method and system standardizes the process, reduces errors and process variability, improves productivity, reduces the cycle time to complete a sale to the customer, centralizes and enforces version control of analysis tools and configuration files used within the process, and reduces effort required to train new analysts.

Thus, it will be observed that some embodiments of the present invention comprise an automated system configured to execute multiple steps in the site specific loads analysis of wind turbines. In a particular embodiment, the system utilizes a spreadsheet of customer data called a wind farm form as input and provides as output, a determination of whether the turbine model and layout are suitable for the selected site in terms of mechanical loads. In other embodiments, other input formats are used.

Various of the technical effects of embodiments of the present invention include a determination that the design of the set of turbines in the wind farm can withstand the fatigue and extreme loads at that specific site. Another technical effect is providing flexibility of defining a set of steps that comprise an analysis and dependencies between the steps. It is possible in many embodiments to replace or modify any step in the analysis process by changing or replacing one or more software modules. Embodiments are capable of associating a set of inputs, libraries and outputs with a specific analysis run, and of tracking all the steps in an analysis as a project and determining individuals involved in each step. Manual intervention can be performed at any step of the automated process to handle unique issues relating to a given analysis. Automated reporting and searching of previous reports can be provided by controlled storage of inputs and outputs and by the centralized analysis process. Variations caused by software management issues are minimized by providing global access to a server that runs processes remotely, thus minimizing discrepancies caused by different runs at different locations using different versions of software or different software programs.

It will be appreciated that some embodiments of the present invention provide an automated system for determining turbines with maximum loads in a wind farm and for analyzing those turbines to ensure that the turbines can withstand site specific fatigue loads and extreme loads for a designed life of the turbines. Also, some embodiments of the present invention bring together several analysis tools under a management/control process. Further, some embodiments of the present invention allow the execution of site specific load analyses as an end-to-end automated process that can be packaged as a service offering.

A web based collaborative application embodiment is thus provided that, while not limited to wind turbine analysis, can be configured to enable a wind engineer to ensure that the turbines in a wind farm at a specific site can withstand loads experienced at that specific site. Embodiments of the present invention provide flexibility to define the steps involved in accomplishing the analysis and can automatically execute all the steps based on specified dependencies.

## Claims

1. A system for analyzing performance of a wind form comprising a server (102) operatively coupled to a computer network (104), said server including a processor (108) having a memory (110), including software modules having instructions configured to instruct said processor to:
obtain, via the computer network, customer input (204) from a plurality of customers, the customer input relating to performance of at least one product (206) operated by each said customer, and wherein each product comprises a plurality of components (208), wherein the product (206) is a wind farm (300), the plurality of components (208) comprise wind turbines (302);
for each said customer input:
perform a relative analysis relating to wind loads on said plurality of components of corresponding said product or products;
use the results of the relative analysis to determine, using the system, whether a specific analysis or analyses relating to wind loads are to be performed and on which of said components; and
if a specific analysis is to be performed, perform a specific analysis or specific analyses on the determined said components and use results of said specific analysis or of said specific analyses to prepare a report or reports relating to wind loads;
wherein said system is configured to maximize or improve a maintenance or longevity metric, the relative analysis determining a subset of said wind turbines (302) having maximum loads, and said specific analysis comprising a load analysis on said subset of wind turbines.

2. A system in accordance with Claim 1 wherein said report or reports (218) includes at least one of service and/or operational recommendations for the corresponding product or products (206) to each customer.

3. A system in accordance with any preceding Claim, wherein the report (218) includes a curtailment strategy.

4. A system in accordance with any preceding Claim, wherein the report (218) includes at least one service and/or operational recommendations comprising moving one or more said wind turbines (302), changing a model of one or more wind turbines, or a combination thereof.

5. A system in accordance with any preceding Claim, wherein the customer input (204) comprises of at least one of meteorological data, geographic data, characteristics of the wind turbine (302), which model the customer wants to use, location of the wind turbine, and the relative analyses and the specific analyses utilize the data.

6. A system in accordance with any preceding Claim, wherein the system is configured to utilize exchangeable software modules.

7. A method to track performance of a strategy to perform an analysis on a product (206) using the system of any preceding claim, said method comprising:
providing the strategy to customers;
obtaining, from the customers, customer input (204) relating to the performance of at least some products and corresponding components; and,
for each said customer who provides customer input:
providing the customer input (204) to the system to perform a relative analysis relating to wind loads on the components of the corresponding product wherein each product comprises a plurality of components (208), wherein the product (206) is a wind farm (300), the plurality of components (208) comprise wind turbines (302);
using the results of the relative analysis to determine, using the system, whether a specific analysis relating to wind loads is to be performed and on which of the components;
if a specific analysis is to be performed, performing a specific analysis on the determined components using the system; and
using results of the specific analysis to provide service and/or operational recommendations for the corresponding product to the customer, wherein said system is configured to maximize or improve a maintenance or longevity metric, the relative analysis determining a subset of said wind turbines (302) having maximum loads, and said specific analysis comprising a load analysis on said subset of wind turbines.

## Patentansprüche

1. System zur Analyse der Leistung eines Windparks, das einen Server (102) aufweist, der mit einem Computernetzwerk (104) betriebsmäßig verbunden ist, wobei der Server einen Prozessor (108) mit einem Speicher (110) enthält, der Softwaremodule mit Instruktionen enthält, die konfiguriert sind, um den Prozessor anzuweisen, um:
über das Computernetzwerk eine Kundeneingabe (204) von mehreren Kunden zu erhalten, wobei die Kundeneingabe eine Leistung wenigstens eines durch den Kunden betriebenen Produktes betrifft und wobei jedes Produkt mehrere Komponenten (208) aufweist, wobei das Produkt (206) ein Windpark (300) ist, wobei die mehreren Komponenten (208) Windkraftanlagen (302) aufweisen;
für jede Kundeneingabe:
eine relative Analyse in Bezug auf Windlasten an den mehreren Komponenten des entsprechenden Produktes oder der entsprechenden Produkte durchzuführen;
die Ergebnisse der relativen Analyse zu verwenden, um unter Verwendung des Systems zu bestimmen, ob eine spezifische Analyse oder spezifische Analysen in Bezug auf Windlasten durchzuführen sind und an welchen der Komponenten; und
falls eine spezifische Analyse durchzuführen ist, eine spezifische Analyse oder spezifische Analysen an den bestimmten Komponenten durchzuführen und Ergebnisse der spezifischen Analyse oder der spezifischen Analysen zu verwenden, um einen Bericht oder Berichte in Bezug auf Windlasten anzufertigen;
wobei das System konfiguriert ist, um eine Wartungs- oder Lebensdauermetrik zu maximieren oder zu verbessern, wobei die relative Analyse eine Untergruppe der Windkraftanlagen (302), die maximale Lasten aufweisen, bestimmt und die spezifische Analyse eine Lastanalyse an der Untermenge der Windkraftanlagen aufweist.

2. System nach Anspruch 1, wobei der Bericht oder die Berichte (218) entweder Instandhaltungs- und/oder Betriebsempfehlungen für das entsprechende Produkt oder die entsprechende Produkte (206) für jeden Kunden enthält/enthalten.

3. System nach einem beliebigen vorhergehenden Anspruch, wobei der Bericht (218) eine Einschränkungsstrategie enthält.

4. System nach einem beliebigen vorhergehenden Anspruch, wobei der Bericht (218) wenigstens entweder Instandhaltungs- und/oder Betriebsempfehlungen enthält, die eine Überführung einer oder mehrerer der Windkraftanlagen (302) an einen anderen Ort, eine Veränderung eines Modells einer oder mehrerer Windkraftanlagen oder eine Kombination von diesen aufweisen.

5. System nach einem beliebigen vorhergehenden Anspruch, wobei die Kundeneingabe (204) wenigstens eines von meteorologischen Daten, geografischen Daten, Charakteristika der Windkraftanlage (302), welches Modell der Kunde zu verwenden wünscht, Lage der Windkraftanlage aufweist und die relativen Analysen und die spezifischen Analysen die Daten nutzen.

6. System nach einem beliebigen vorhergehenden Anspruch, wobei das System konfiguriert ist, um austauschbare Softwaremodule zu verwenden.

7. Verfahren zur Verfolgung der Leistung einer Strategie, um eine Analyse an einem Produkt (206) durchzuführen, unter Verwendung des Systems nach einem beliebigen vorhergehenden Anspruch, wobei das Verfahren aufweist;
Bereitstellen der Strategie für Kunden;
Erhalten einer Kundeneingabe (204) in Bezug auf die Leistung wenigstens einiger Produkte und zugehöriger Komponenten von den Kunden; und
für jeden Kunden, der eine Kundeneingabe liefert:
Liefern der Kundeneingabe (204) zu dem System, um eine relative Analyse in Bezug auf Windlasten an den Komponenten des entsprechenden Produktes durchzuführen, wobei jedes Produkt mehrere Komponenten (208) aufweist, wobei das Produkt (206) ein Windpark (300) ist, wobei die mehreren Komponenten (208) Windkraftanlagen (302) aufweisen;
Verwenden der Ergebnisse der relativen Analyse, um unter Verwendung des Systems zu bestimmen, ob eine spezifische Analyse in Bezug auf Windlasten durchzuführen ist und an welchen der Komponenten;
falls eine spezifische Analyse durchzuführen ist, Durchführen einer spezifischen Analyse an den bestimmten Komponenten unter Verwendung des Systems; und
Verwenden von Ergebnissen der spezifischen Analyse, um Instandhaltungs- und/oder Betriebsempfehlungen für das entsprechende Produkt an den Kunden zu liefern, wobei das System konfiguriert ist, um eine Wartungs- oder Lebensdauermetrik zu maximieren oder zu verbessern, wobei die relative Analyse eine Untergruppe der Windkraftanlagen (302), die maximale Lasten aufweisen, bestimmt und die spezifische Analyse eine Lastanalyse an der Untermenge der Windkraftanlagen aufweist.

## Revendications

1. Système pour analyser les performances d'un parc éolien, comportant un serveur (102) coopérant avec un réseau informatique (104), ledit serveur comprenant un processeur (108) ayant une mémoire (110), incluant des modules logiciels à instructions conçues pour demander au processeur de :
obtenir, par l'intermédiaire du réseau informatique, des communications (204) faites par une pluralité de clients, les communications des clients portant sur les performances d'au moins un produit (206) exploité par chaque dit client, et chaque produit comprenant une pluralité d'éléments (208), le produit (206) étant un parc éolien (300), la pluralité d'éléments (208) étant constituée par des éoliennes (302) ;
pour chaque dite communication de client :
réaliser une analyse relative portant sur les sollicitations dues au vent subies par ladite pluralité d'éléments dudit ou desdits produit(s) correspondant(s) ;
utiliser les résultats de l'analyse relative pour déterminer, à l'aide du système, si une ou des analyse(s) spécifique(s) portant sur les sollicitations dues au vent doit/doivent être réalisée(s), et sur quel/quels dits éléments ; et
si une analyse spécifique doit être réalisée, réaliser une analyse spécifique ou des analyses spécifiques sur lesdits éléments déterminés et utiliser les résultats de ladite analyse spécifique ou desdites analyses spécifiques pour élaborer un compte tenu ou des comptes rendus portant sur les sollicitations dues au vent ;
ledit système étant conçu pour porter à son maximum ou améliorer une estimation de maintenance ou de longévité, l'analyse relative déterminant un sous-ensemble desdites éoliennes (302) subissant des sollicitations maximales, et ladite analyse spécifique comprenant une analyse des sollicitations subies par ledit sous-ensemble d'éoliennes.

2. Système selon la revendication 1, dans lequel ledit/lesdits comptes rendus (218) contient/contiennent, à l'attention de chaque client, des recommandations pour l'entretien et/ou l'exploitation concernant le ou les produits correspondant(s) (206).

3. Système selon l'une quelconque des revendications précédentes, dans lequel le compte rendu (218) contient une stratégie de mise en activité réduite.

4. Système selon l'une quelconque des revendications précédentes, dans lequel le compte rendu (218) contient des recommandations pour l'entretien et/ou l'exploitation consistant à déplacer une ou plusieurs dites éoliennes (302), à changer un modèle d'une ou de plusieurs éoliennes, ou consistant en une combinaison des deux.

5. Système selon l'une quelconque des revendications précédentes, dans lequel la communication (204) du client contient des données météorologiques et ou des données géographiques et/ou des caractéristiques de l'éolienne (302), le modèle que le client veut utiliser, la localisation de l'éolienne et les analyses relatives et les analyses spécifiques utilisent les données.

6. Système selon l'une quelconque des revendications précédentes, le système étant conçu pour utiliser des modules logiciels interchangeables.

7. Procédé de suivi des résultats d'une stratégie pour réaliser une analyse sur un produit (206) à l'aide du système selon l'une quelconque des revendications précédentes, ledit procédé comportant :
la transmission de la stratégie aux clients ;
l'obtention, de la part des clients, de communications (204) de clients relatives aux performances d'au moins certains produits et d'éléments correspondants ; et,
pour chaque dit client qui fournit des communications de client :
la transmission de la communication (204) du client au système pour réaliser une analyse relative portant sur les sollicitations dues au vent subies par les éléments du produit correspondant, chaque produit comprenant une pluralité d'éléments (208), le produit (206) étant un parc éolien (300), la pluralité d'éléments (208) étant constituée par des éoliennes (302) ;
l'utilisation des résultats de l'analyse relative pour déterminer, à l'aide du système, si une analyse spécifique portant sur les sollicitations dues au vent doit être réalisée, et sur quel élément ;
si une analyse spécifique doit être réalisée, la réalisation, à l'aide du système, d'une analyse spécifique sur les éléments déterminés ; et
l'utilisation de résultats de l'analyse spécifique pour fournir au client des recommandations pour l'entretien et/ou l'exploitation concernant le produit correspondant, ledit système étant conçu pour porter à son maximum ou améliorer une estimation de maintenance ou de longévité, l'analyse relative déterminant un sous-ensemble desdites éoliennes (302) subissant des sollicitations maximales, et ladite analyse spécifique comprenant une analyse des sollicitations subies par ledit sous-ensemble d'éoliennes.
